# FASCICULE DE BREVET EUROPEEN

(11) **EP 0 770 749 B1**
(45) Date de publication et mention de la délivrance du brevet: **02.04.2003**
(21) Numéro de dépôt: 96402276.8
(22) Date de dépôt: 25.10.1996
(51) Int. Cl.: E05B 49/00

(54) **Système mains libres de déverrouillage et/ou d'ouverture d'ouvrant de véhicule automobile**
Handfreies System zum Entriegeln und/oder Öffnen eines Kraftfahrzeugteiles
Hands-free system for unlocking and/or opening part of a motor vehicle

(30) Priorité: 26.10.1995 FR 9512640; 22.07.1996 FR 9609166
(43) Date de publication de la demande: 02.05.1997
(60) Demande divisionnaire: 00127566.8
(73) Titulaire: VALEO SECURITE HABITACLE, 94000 Créteil (FR)
(72) Inventeur: Garnault, Joel, 95110 Sannois (FR)
(74) Mandataire: Martin, Jean-Jacques

(56) Documents cités:
- WO-A-90/08242
- DE-A- 3 336 093
- DE-A- 3 507 389
- DE-A- 3 820 248
- DE-C- 4 409 167
- US-A- 3 725 939
- US-A- 4 354 189
- IEEE TRANSACTIONS ON INDUSTRIAL ELECTRONICS AND CONTROL INSTRUMENTATION, vol. 35, no. 2, 1 Mai 1988, NEW YORK US, pages 208-216, XP000096890 MOTOKI HIRANO,MIKIO TAKEUCHI,TAKAHISA TOMODA,KIN-ICHIRO NAKANO: "keyless entry system with radio card transponder"

## Description

L'invention concerne les systèmes de déverrouillage et/ou d'ouverture d'ouvrants de véhicules automobiles, notamment de coffres à bagages.

Il existe actuellement des systèmes d'assistance à l'ouverture ou d'ouverture automatique de coffre, qui utilisent des télécommandes actionnées manuellement. De tels systèmes nécessitent la disponibilité d'au moins une main de l'opérateur, ce qui peut être très mal commode si celui-ci est chargé d'objet(s) à déposer dans le coffre à bagages.

Des systèmes sans clé mécanique pour le verrouillage/déverrouillage du coffre et des portières d'un véhicule automobile sont également connus des documents XP000096890 et DE 38 20 248.

L'invention propose quant à elle un système de déverrouillage et d'ouverture totalement mains libres.

A cet effet, l'invention propose un système de déverrouillage et/ou d'ouverture d'un ouvrant de véhicule automobile comportant, sur le véhicule, une unité de gestion commandant des moyens de déverrouillage et/ou d'ouverture de l'ouvrant, ainsi que des moyens d'émission/réception reliés à ladite unité de gestion, ledit système comportant également des moyens d'émission/réception portés par un utilisateur et destinés à transmettre aux moyens d'émission/réception du véhicule, un code d'identification pour le déverrouillage et/ ou l'ouverture de l'ouvrant, caractérisé en ce que les moyens d'émission/réception de l'utilisateur sont constitués par un transpondeur porté par l'utilisateur, les moyens d'émission/réception du véhicule comportant au moins une antenne située sur l'ouvrant ou à proximité de celui-ci, lesdits moyens d'émission/réception ne dialoguant avec le transpondeur que lorsque celui-ci est situé dans le voisinage immédiat de ladite antenne, l'unité de gestion commandant le déverrouillage et/ou l'ouverture de l'ouvrant lorsque le transpondeur est présenté selon une séquence prédéterminée à l'antenne ou aux antennes des moyens d'émission/réception du véhicule.

Par transpondeur, on entend ici et dans tout le présent texte un émetteur/récepteur dépourvu de source d'alimentation autonome, et téléalimenté par les signaux radiofréquence qu'il reçoit en provenance de l'unité avec laquelle il dialogue.

Un tel système de verrouillage est particulièrement avantageux dans le cas d'un ouvrant de coffre, mais pourrait bien entendu également être utilisé de façon plus générale pour la commande du déverrouillage et/ou de l'ouverture de tout ouvrant de véhicule automobile.

D'autres caractéristiques et avantages de l'invention ressortiront encore de la description qui suit. Cette description est purement illustrative et non limitative. Elle doit être lue en regard des dessins annexés sur lesquels :
- la figure 1 est une vue de face de l'arrière d'un véhicule équipé d'un système de déverrouillage et/ou d'ouverture conforme à un mode de réalisation possible de l'invention, cette vue de face étant complétée par une représentation schématique d'un transpondeur dudit système ;
- la figure 2 est une représentation schématique en vue de côté de l'arrière du véhicule représenté sur la figure 1 ;
- la figure 3 est une vue de face de l'arrière semblable à celle de la figure 1, sur laquelle on a porté les zones où un opérateur doit successivement placer son transpondeur pour actionner le déverrouillage et/ou l'ouverture du coffre ;
- la figure 4 est une vue de dessus d'un véhicule automobile dont le verrouillage/déverrouillage est commandé par un système conforme à un mode de réalisation possible de l'invention.

Le véhicule illustré sur les figures a été référencé par 1, son coffre par C.

Le système de déverrouillage et/ou d'ouverture de coffre qui équipe ce véhicule 1 comporte des moyens 3 d'émission/réception à courte portée destinés à interroger un transpondeur 4 porté par un utilisateur.

Ces moyens 3 comportent en particulier au moins deux antennes 5a, 5b réparties en deux endroits de l'arrière du véhicule.

Les antennes 5a, 5b peuvent être par exemple réparties dans une direction correspondant à la largeur du coffre, notamment être disposées de part et d'autre de l'axe longitudinal du véhicule, en étant séparées l'une de l'autre afin de réaliser deux lobes d'émission ne présentant pas ou peu de recouvrement.

Selon la configuration du véhicule, elles peuvent être portées par l'ouvrant du coffre, ou être disposées à proximité immédiate dudit ouvrant, par exemple à l'intérieur de pare-chocs du véhicule ou encore être intégrées au voisinage immédiat des feux arrières de la voiture ou à l'intérieur desdits feux arrières.

Les moyens d'émission/réception 3 comportent également des unités d'interface 6a, 6b auxquelles les antennes 5a, 5b sont respectivement reliées, ainsi qu'une unité de gestion 2 disposée à l'intérieur du véhicule et à laquelle ces unités d'interface 6a, 6b sont reliées.

C'est cette unité de gestion 2 qui envoie des ordres à la serrure du coffre du véhicule pour commander son déverrouillage et son ouverture. La gestion du déverrouillage et de l'ouverture du coffre C par ladite unité 2 sera décrite plus loin de façon détaillée.

Le transpondeur 4 est une unité d'émission/réception destinée à émettre un code d'identification à la suite d'une séquence d'interrogation émise depuis le véhicule 1 par l'intermédiaire des moyens d'émission 3.

Sa portée est relativement réduite (de l'ordre de quelques dizaines de centimètres).

Il comprend principalement, de façon connue en soi, un enroulement secondaire 4a qui se charge et se décharge sous l'effet du rayonnement radio-fréquence transmis par un enroulement primaire que comportent les moyens d'émission 3, ainsi qu'un circuit intégré 4b dans lequel est stocké et géré le code d'identification de l'utilisateur.

Ce transpondeur 4 est par exemple logé sur un élément de type bijou, tel qu'un bracelet, notamment un bracelet de montre, une bague, un bouton de manchette, etc. Il peut également être porté par l'utilisateur dans une poche, à sa ceinture ou à l'extrémité d'une manche d'un vêtement.

Par ailleurs, des moyens 7 sont également prévus au niveau du coffre C ou au voisinage de celui-ci pour détecter la présence de l'utilisateur au voisinage de l'ouvrant dudit coffre.

Ces moyens 7 sont reliés à l'unité de gestion 2 et celle-ci déclenche l'interrogation du transpondeur 4 par les moyens d'émission/réception 3 lorsque la présence de l'utilisateur est détectée par les moyens 7.

Ces moyens 7 sont par exemple constitués par un ou plusieurs capteurs à ultrasons.

Pour ouvrir et déverrouiller le coffre C de son véhicule 1, l'opérateur doit présenter le transpondeur 4 successivement devant chacune des deux antennes 5a, 5b selon une séquence précise.

Cette séquence est choisie de façon à ce que le déverrouillage et l'ouverture ne puissent pas être déclenchés par des mouvements anodins du porteur du transpondeur 4, et notamment lorsque celui-ci passe derrière son véhicule sans souhaiter ouvrir son coffre.

Le coffre C du véhicule 1 est avantageusement équipé de moyens de visualisation 8, par exemple des voyants bicolores disposés à proximité des antennes 5a, 5b. Ces moyens 8 sont destinés à aider le porteur du transpondeur à réaliser les gestes nécessaires à l'ouverture mains libres, ainsi qu'à l'avertir du déverrouillage effectif du coffre C, puis de son ouverture automatique.

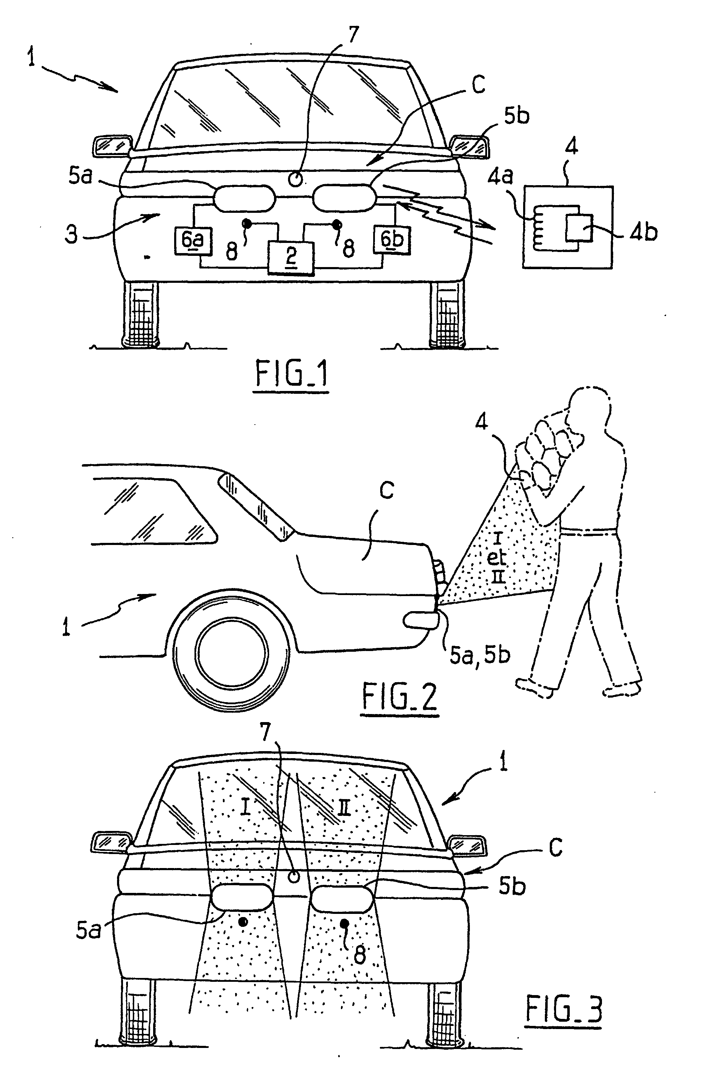

Un exemple de séquence de commande va maintenant être décrit en référence aux figures 2 et 3, dans le cas où l'opérateur porte le transpondeur 4 sur un bracelet au niveau de son poignet.

Cet opérateur, qui a par exemple les bras chargés, positionne son bras porteur du transpondeur 4 derrière le coffre C, de façon décalée de 5 à 30 cm vers la droite ou la gauche par rapport au centre dudit coffre C.

Il est alors détecté par le capteur de présence 7 qui déclenche une séquence d'interrogations sur chacune des deux antennes 5a, 5b situées de part et d'autre de l'axe central du coffre.

Si l'opérateur est correctement positionné - c'est à dire si le transpondeur 4 est situé dans une des deux zones I ou II telles que représentées sur la figure 3, dans lesquelles il est susceptible de dialoguer avec les antennes 5a ou 5b - l'une desdites antennes 5a, 5b, et une seule d'entre elles, reçoit le signal de réponse émis par le transpondeur 4.

Le code dudit transpondeur 4 est reconnu par l'unité de gestion 2, qui commande les moyens de visualisation 8 pour indiquer à l'opérateur que son code a été reconnu par l'antenne devant laquelle il se trouve.

Par exemple, l'unité 2 allume un voyant vert situé au voisinage de cette antenne.

Lorsqu'il ce voyant s'allume, l'opérateur décale son bras de l'autre côté du coffre C pour, dans un délai déterminé (par exemple 1 à 5 secondes), le positionner devant la deuxième antenne 5a, 5b, afin que le code soit identifié au niveau de celle-ci.

Le voyant allumé au niveau de la première antenne s'éteint, puisque le code n'y est plus reçu du fait de l'éloignement du transpondeur 4.

Un voyant situé au voisinage de la deuxième antenne s'allume pour signaler que le signal du transpondeur 4 a été détecté au niveau de la deuxième antenne et que son code a été reconnu.

L'opérateur dispose alors du même laps de temps de 1 à 5 secondes pour à nouveau positionner le transpondeur 4 devant la première antenne.

Lorsque le code du transpondeur 4 est à nouveau reconnu par la première antenne les deux voyants verts des moyens 8 s'allument simultanément ou clignotent pour avertir l'opérateur du succès de la procédure de demande d'ouverture du coffre.

Puis l'unité 2 commande d'autres voyants des moyens de visualisation pour avertir l'opérateur de l'imminence de l'ouverture du coffre (par exemple par allumage simultané ou clignotement de deux voyants en rouge).

Bien entendu, dans le cas où le coffre du véhicule était déjà déverrouillé, l'unité de gestion 2 ne commande que l'ouverture du coffre.

On notera que la séquence d'aller-retour que doit effectuer l'opérateur avec son bras devant les antennes permet d'éviter que le simple passage de l'opérateur devant le coffre du véhicule ne déclenche de façon intempestive le déverrouillage et l'ouverture dudit coffre.

Si pour une raison quelconque, la séquence gestuelle de l'opérateur est interrompue (non reconnaissance du code par une seule antenne à la fois, non respect des plages de distance ou des temps impartis pour chaque position,...) la procédure devra être entièrement recommencée.

Les plages de temps et de distance sont optimisées afin de garantir d'une part une procédure simple et sans ambiguïté, d'autre part des contraintes gestuelles limitées, bien acceptées par l'utilisateur.

Par ailleurs, le coffre du véhicule peut présenter des moyens permettant un déclenchement manuel - par exemple un bouton-poussoir situé à proximité de l'une des antennes - dont l'actionnement doublé d'une reconnaissance correcte du code du transpondeur 4, entraîne le déverrouillage, puis l'ouverture automatique du coffre, avec la possibilité d'avertir l'utilisateur par l'intermédiaire de la visualisation décrite ci-dessus, de la reconnaissance du code, puis de l'imminence de l'ouverture du coffre. Cette fonction permet d'éviter la séquence gestuelle dans le cas où l'ouverture totalement mains libres n'est pas nécessaire ou pas souhaitée par l'utilisateur.

On a décrit une séquence gestuelle possible dans le cas où le transpondeur 4 est porté par le bras de l'utilisateur. Dans le cas où le transpondeur est porté sur une autre partie du corps (dans une poche, sur la ceinture, ...), d'autres types de séquence peuvent bien entendu être envisagées.

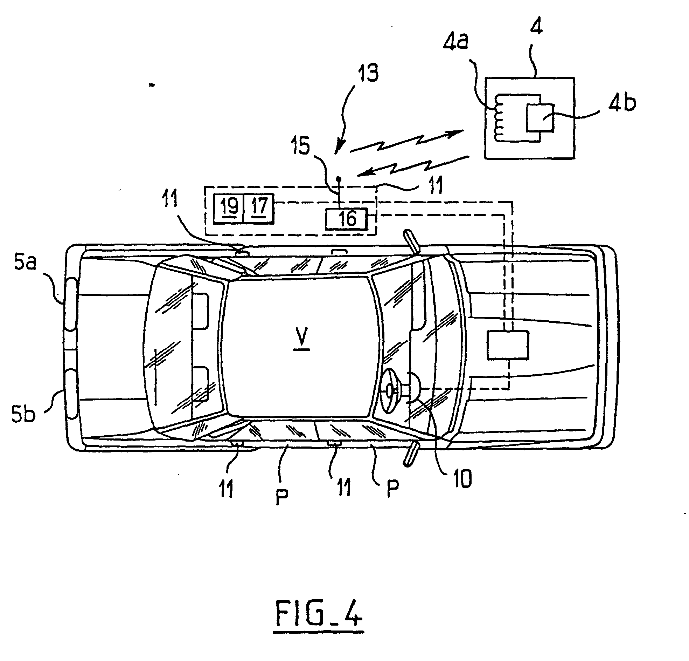

Par ailleurs, ainsi qu'on l'a illustré sur la figure 4, le transpondeur 4 porté par l'utilisateur peut également être utilisé pour commander le verrouillage/déverrouillage des portières - référencées par P - du véhicule.

A cet effet, les portières P présentent également des moyens 13 d'émission/réception à courte portée analogues aux moyens et 3 destinés à interroger le transpondeur 4 lorsque celui-ci est à proximité immédiate des poignées des portières P, ces poignées ayant été référencées par 11 sur la figure 4.

Ces moyens 13 comportent par exemple une antenne 15 d'émission/réception ainsi qu'une interface 16 qui est reliée à l'unité de gestion 2.

Des moyens 17 sont prévus sur le véhicule pour détecter la main de l'utilisateur lorsque celle-ci approche de la poignée 11 ou actionne celle-ci.

Ces moyens 17 sont reliés à l'unité de gestion 2. Celle-ci déclenche l'interrogation du transpondeur 14 par les moyens d'émission/réception 13, lorsque la présence de la main de l'utilisateur au niveau de la poignée 11 est détectée.

Ces moyens 17 sont par exemple constitués par un contact permettant de détecter le basculement de la poignée 11.

En variante encore, ils peuvent être constitués par des capteurs de présence de la main de type infrarouge ou par une plaque sensitive située sur la poignée 11.

Ainsi, un utilisateur qui porte un tel transpondeur 4 au niveau de sa main ou de son poignet commande le déverrouillage de la portière P sans autre manipulation que de basculer la poignée 11 pour ouvrir ladite portière.

Lorsque la présence physique de la main de l'utilisateur est détectée par les moyens 17, les moyens d'émission/réception 13 interrogent le transpondeur 4. Après reconnaissance par l'unité de gestion 2 du code d'identification porté par le transpondeur 4, celle-ci commande les moyens de verrouillage de la portière P de façon à déverrouiller celle-ci.

De manière avantageuse, le déverrouillage de la portière P intervient suffisamment rapidement pour que le mouvement de basculement de la poignée 11 permettant d'activer les moyens 17, soit poursuivi et provoque la libération des moyens de verrouillage mécaniques de la portière.

Pour le verrouillage de la portière P, il est prévu des moyens 19 permettant de détecter une pression sur la poignée 11. Ces moyens 19 sont également reliés à l'unité de gestion 2.

En refermant la portière P, l'utilisateur appuie sur la poignée 11. Lorsque la pression de la main de l'utilisateur sur la poignée 11 est détectée par les moyens 19, l'unité 2 déclenche le verrouillage de la portière P, lorsque celle-ci est refermée.

On comprendra aisément que par rapport à des systèmes classiques à clé mécanique ou à télécommande, un tel système apporte à l'utilisateur un plus grand confort ainsi que des gains de temps importants, notamment sur des trajets avec arrêts fréquents, puisqu'il est totalement transparent pour l'utilisateur. En particulier, l'utilisateur n'a pas à rechercher sa clé mécanique ou sa télécommande dans sa poche ou son sac lorsqu'il veut ouvrir son véhicule.

Par ailleurs encore, le circuit intégré 4b du transpondeur 4 peut stocker d'autres informations personnalisées relatives à l'utilisateur, par exemple celles concernant le réglage de la position du siège, du volant, des rétroviseurs, etc.

Ces informations sont transmises avec le code d'identification, lors de l'interrogation du transpondeur 4 par les moyens d'émission/réception 13.

L'actionnement des différents éléments du véhicule concernés par ces informations est alors par exemple réalisé simultanément au verrouillage/déverrouillage des portières.

On notera en outre que le système proposé par l'invention permet à l'unité de gestion 2 de localiser la portière P au niveau de laquelle l'utilisateur se présente.

Cette information peut être utilisée par l'unité 2 pour commander de façon localisée le réglage des différents éléments précités (sièges, rétroviseurs, etc.) : seul le siège correspondant à la portière P à laquelle l'utilisateur s'est présenté sera réglé ; également, les rétroviseurs ou la position du volant ne seront réglés que si l'utilisateur s'est présenté au niveau de la portière conducteur ; il pourra également être prévu que seule la portière à laquelle l'utilisateur s'est présenté est déverrouillée, les autres portières restant verrouillées.

Le transpondeur 4 peut également avantageusement être utilisé pour la désactivation du dispositif d'immobilisation de contrôle moteur.

Le système selon l'invention permettant de totalement supprimer les clés mécaniques, le conducteur met le contact et démarre le véhicule en tournant un interrupteur multipositions situé par exemple sous le volant.

Le transpondeur 4 est interrogé par exemple lorsqu'un mouvement dudit interrupteur de démarrage est détecté. Le code fourni par le transpondeur 4 est transmis à l'unité de gestion du dispositif d'immobilisation.

Cette unité de gestion est avantageusement l'unité de gestion 2 reliée aux unités d'interface 6a, 6b et 16.

En variante, il peut être prévu que l'interrupteur de démarrage est normalement bloqué et que seule la reconnaissance du code d'identification correct autorise son basculement.

En variante encore, il peut être prévu un système de débrayage qui est tel que l'interrupteur n'est pas en prise tant que le code d'identification n'a pas été reçu.

On notera qu'habituellement un conducteur ne se sert pas de la même main pour actionner la poignée de la portière de sa voiture et commander la mise du contact et le démarrage : pour des voitures roulant à droite, l'ouverture de la portière est réalisée par la main gauche, alors que le contact est actionné par la main droite.

Pour permettre une interrogation indépendamment de la main qui porte le transpondeur 4, les moyens d'émission/réception à l'intérieur de l'habitacle du véhicule automobile comportent avantageusement une antenne en boucle 10 qui fait le tour de la zone des instruments de la planche de bord ou qui est située autour du volant. En variante encore, l'antenne peut être située au niveau du bloc de commutation sous le volant.

Ces différentes dispositions d'antennes permettent en effet une interrogation d'un transpondeur 4 porté par l'utilisateur au voisinage de sa main gauche, lorsque ladite main est sous le volant pour la mise du contact. Elles permettent également d'interroger en permanence le transpondeur 4 lorsque le conducteur a la main sur le volant, pour vérifier que ledit transpondeur 4 est toujours présent au poignet du conducteur pendant la conduite.

L'unité de gestion 2 réalise à cet effet des interrogations régulières dudit transpondeur 4. Elle interprète une absence de réponse pendant un court laps de temps comme un geste du conducteur et ne la signale pas. Par contre, une absence prolongée est signalée au conducteur par un voyant sur la planche de bord ou un signal sonore, de sorte que le conducteur est immédiatement prévenu si le transpondeur 4 n'est plus à sa place sur son poignet ou sa main.

Comme on l'aura compris, un tel système est transparent : un utilisateur commande le déverrouillage des portières sans avoir à effectuer d'autres opérations que celle de manipulation de la poignée de sa portière.

En outre, avec un tel système, le risque que l'utilisateur ne se sépare de son transpondeur après être rentré dans le véhicule est réduit. Le transpondeur est en effet soit porté par un élément de type bijou, tel qu'un bracelet, dont l'utilisateur n'a aucune raison de se dessaisir lorsqu'il conduit, soit logé à une extrémité d'une manche d'un vêtement, que l'utilisateur porte a priori en permanence sur lui.

Par ailleurs, un tel système utilise une électronique simplifiée. Il ne nécessite des antennes d'émission et de réception qu'au niveau des poignées des portières. En outre, les émissions radiofréquences sont localisées et de courte portée, ce qui supprime les risques d'interférences, ainsi que les risques de conflit entre utilisateurs.

Le caractère local des échanges réduit également les risques de piratage.

On notera également qu'un transpondeur est, du fait qu'il ne comporte pas de piles, facilement miniaturisable.

En outre, avec le système proposé par l'invention, la seule présence du porteur du transpondeur dans l'environnement du véhicule ne suffit pas à commander le déverrouillage des portières. Il faut que la main de l'utilisateur soit déplacée pour venir à proximité immédiate de la poignée.

Dans la mesure où l'utilisation conserve un rôle actif dans l'opération de déverrouillage, un tel système supprime par conséquent les autorisations de déverrouillage intempestives qui sont un inconvénient majeur des systèmes interactifs.

## Revendications

1. Système de déverrouillage et/ou d'ouverture d'un ouvrant (C) de véhicule automobile comportant, sur le véhicule, une unité de gestion (2) commandant des moyens de déverrouillage et/ou d'ouverture de l'ouvrant (C), ainsi que des moyens d'émission/réception (3) reliés à ladite unité de gestion (2), ledit système comportant également des moyens d'émission/réception (4) portés par un utilisateur et destinés à transmettre aux moyens d'émission/réception (3) du véhicule, un code d'identification pour le déverrouillage et/ ou l'ouverture de l'ouvrant, les moyens d'émission/réception de l'utilisateur sont constitués par un transpondeur (4) porté par l'utilisateur, les moyens d'émission/réception (3) du véhicule comportant au moins une antenne (5a, 5b) située sur l'ouvrant (C) ou à proximité de celui-ci, lesdits moyens d'émission/réception (3) ne dialoguant avec le transpondeur (4) que lorsque celui-ci est situé dans le voisinage immédiat de ladite antenne (5a, 5b), **caractérisé en ce que** l'unité de gestion commandant le déverrouillage et/ou l'ouverture de l'ouvrant (C) lorsque le transpondeur (4) est présenté selon une séquence prédéterminée à l'antenne ou aux antennes (5a, 5b) des moyens d'émission/réception (3) du véhicule.

2. Système selon la revendication 1, **caractérisé en ce que** les moyens d'émission/réception (3) du véhicule comportent au moins deux antennes (5a, 5b) auxquelles le transpondeur (4) doit être présenté selon une séquence prédéterminée pour que l'unité de gestion (2) commande le déverrouillage et/ou l'ouverture de l'ouvrant (C).

3. Système selon la revendication 2, **caractérisé en ce que** les antennes (5a, 5b) sont réparties selon une direction correspondant à celle de la largeur de l'ouvrant (C).

4. Système selon l'une des revendications précédentes, **caractérisé en ce qu'**il comporte des moyens (7) pour détecter la présence d'un utilisateur au voisinage de l'ouvrant (C).

5. Système selon la revendication 4, **caractérisé en ce que** les moyens (7) de détection de la présence d'un utilisateur comportent au moins un capteur à ultrason.

6. Système selon l'une des revendications précédentes, **caractérisé en ce qu'**il comporte au voisinage d'une antenne (5a, 5b) des moyens de visualisation (8) permettant d'avertir l'utilisateur de la reconnaissance ou de la non reconnaissance du code d'identification d'un transpondeur (4) présenté devant ladite antenne (5a, 5b) et/ou du succès de la procédure de reconnaissance de la séquence de présentation dû transpondeur (4) devant la ou les antennes (5a, 5b) et/ou de l'imminence de l'ouverture.

7. Système selon l'une des revendications précédentes, **caractérisé en ce qu'**il comporte en outre des moyens permettant un déclenchement manuel, l'unité de gestion commandant le déverrouillage et/ou l'ouverture de l'ouvrant lorsque ces moyens sont actionnés et que le code d'identification du transpondeur (4) est reconnu, après que celui-ci a été présenté devant une antenne (5a, 5b).

8. Système de déverrouillage et/ou d'ouverture d'un ouvrant de coffre de véhicule automobile, **caractérisé en ce qu'**il est constitué par un système selon l'une des revendications précédentes.

9. Système selon la revendication 8, **caractérisé en ce que** les antennes (5a, 5b) sont disposées au niveau du pare choc du véhicule.

10. Système selon la revendication 8, **caractérisé en ce que** les antennes (5a, 5b) sont disposées au voisinage immédiat des feux arrières du véhicule.

11. Système selon la revendication 8, **caractérisé en ce que** les antennes (5a, 5b) sont disposées dans les feux arrières du véhicule.

12. Système sans clé mécanique pour le verrouillage/déverrouillage du coffre et des portières d'un véhicule automobile, comportant pour le déverrouillage et/ou l'ouverture du coffre un système selon l'une des revendications 8 et suivantes et comportant en outre des moyens d'émission/réception (13) qui comprennent une antenne (15) située dans le voisinage immédiat de la poignée (11) d'une portière (P), ces moyens (13) étant destinés à dialoguer avec le transpondeur (4) pour identifier le code d'identification de celui-ci, lesdits moyens (13) ne dialoguant avec ledit transpondeur (4) que lorsque celui-ci est situé dans le voisinage immédiat de la poignée (11).

13. Système selon la revendication 12, **caractérisé en ce que** les portières du véhicule sont dépourvues de serrures à clé mécanique.

14. Système selon l'une des revendications 12 ou 13, **caractérisé en ce que** la poignée (11) comporte des moyens (17) pour détecter que la main de l'utilisateur est au voisinage immédiat de la poignée (11) ou actionne celle-ci, l'unité de gestion (2) commandant l'interrogation du transpondeur (14) lorsque les moyens de détection précités détectent la présence de la main de l'utilisateur au niveau de ladite poignée (11).

15. Système selon l'une des revendications 12 à 14, **caractérisé en ce qu'**il comporte des moyens pour détecter une pression de la main de l'utilisateur sur la poignée (11), l'unité de gestion (2) commandant le verrouillage de la portière lorsque la porte est refermée et que les moyens de détection précités détectent une pression de la main de l'utilisateur sur ladite poignée (11).

16. Système selon l'une des revendications précédentes, **caractérisé en ce qu'**il comporte également des moyens d'émission/réception (10) disposés à l'intérieur de l'habitacle du véhicule et reliés à une unité de gestion (2), ces moyens étant destinés à interroger le transpondeur (4) lorsque l'utilisateur rentre dans le véhicule, ladite unité de gestion (2) commandant la désactivation du dispositif d'immobilisation du moteur, lorsque le code d'identification du transpondeur (4) est identifié.

17. Système selon la revendication 16, **caractérisé en ce que** l'unité de gestion (2) qui commande la désactivation du dispositif d'immobilisation et l'unité de gestion (2) sont confondues.

18. Système selon l'une des revendications 16 et 17, **caractérisé en ce que** les moyens d'émission/réception disposés à l'intérieur de l'habitacle du véhicule interrogent régulièrement le transpondeur (4) lorsque l'utilisateur est à l'intérieur du véhicule.

19. Système selon l'une des revendications précédentes, **caractérisé en ce que** le transpondeur (4) transmet à l'unité de gestion (2), avec son code d'identification, des informations pour le réglage personnalisé de certains éléments du véhicule, par exemple pour le réglage de la position des sièges ou des rétroviseurs.

20. Système selon la revendication 19, **caractérisé en ce que** l'unité de gestion (2) commande de façon localisée le réglage de ces différents éléments, en fonction de la portière au niveau de laquelle l'utilisateur s'est présenté.

21. Véhicule automobile **caractérisé en ce qu'**il comporte pour au moins un de ses ouvrants, notamment son coffre, un système de déverrouillage et/ou d'ouverture selon l'une des revendications précédentes.

## Claims

1. System for unlocking and/or opening an openable member (C) of a motor vehicle, the system comprising, on the vehicle, a control unit (2) controlling means for unlocking and/or opening the openable member (C), and transmitter/receiver means (3) connected to the said control unit (2), the said system also comprising transmitter/receiver means (4) carried by a user and designed to transmit an identification code to the transmitter/receiver means (3) of the vehicle to unlock and/or open the openable member, the user's transmitter/receiver means are constituted by a transponder (4) carried by the user, the transmitter/receiver means (3) of the vehicle including at least one antenna (5a, 5b) situated on the openable member (C) or in the vicinity thereof, the said transmitter/receiver means (3) communicating with the transponder (4) only when the transponder is situated in the immediate vicinity of the said antenna (5a, 5b), **characterised in that** the control unit orders the unlocking and/or opening of the openable member (C) when the transponder (4) is presented according to a predetermined sequence to the antenna or antennas (5a, 5b) of the transmitter/receiver means (3) of the vehicle.

2. System according to Claim 1, **characterised in that** the transmitter/receiver means (3) of the vehicle include at least two antennas (5a, 5b), to which the transponder (4) must be presented in a predetermined sequence for the control unit (2) to order the unlocking and/or opening of the openable member (C).

3. System according to Claim 2, **characterised in that** the antennas (5a, 5b) are distributed in a direction corresponding to that of the width of the openable member (C).

4. System according to one of the preceding claims, **characterised in that** it includes means (7) for detecting the presence of a user in the vicinity of the openable member (C).

5. System according to Claim 4, **characterised in that** the means (7) for detecting the presence of a user include at least one ultrasound sensor.

6. System according to one of the preceding claims, **characterised in that** it includes indication means (8) in the vicinity of an antenna (5a, 5b) enabling the user to be informed that the identification code of a transponder (4) presented to the said antenna (5a, 5b) has been recognised or not recognised and/or to be informed that the procedure for recognizing the sequence of presentation of the transponder (4) to the antenna or antennas (5a, 5b) has succeeded and/or that the member is about to open.

7. System according to one of the preceding claims, **characterised in that** it also includes means enabling manual release, the control unit ordering the unlocking and/or opening of the openable member when these means are actuated and the identification code of the transponder (4) is recognised, after the latter has been presented to an antenna (5a, 5b).

8. System for unlocking and/or opening an openable member of a motor-vehicle boot, **characterised in that** it is constituted by a system according to one of the preceding claims.

9. System according to Claim 8, **characterised in that** the antennas (5a, 5b) are disposed at the vehicle bumper.

10. System according to Claim 8, **characterised in that** the antennas (5a, 5b) are disposed in the immediate vicinity of the rear lights of the vehicle.

11. System according to Claim 8, **characterised in that** the antennas (5a, 5b) are disposed in the rear lights of the vehicle.

12. System for locking/unlocking the boot and the doors of a motor vehicle without using a mechanical key, comprising a system according to Claim 8 or one of the following claims for unlocking and/or opening the boot, and further comprising transmitter/receiver means (13) which comprise an antenna (15) situated in the immediate vicinity of the handle (11) of a door (P), these means (13) being designed to communicate with the transponder (4) to identify the identification code thereof, the said means (13) communicating with the said transponder (4) only when it is situated in the immediate vicinity of the handle (11).

13. System according to Claim 12, **characterised in that** the doors of the vehicle are not provided with mechanical-key locks.

14. System according to either of Claims 12 and 13, **characterised in that** the handle (11) includes means (17) for detecting that the hand of the user is in the immediate vicinity of the handle (11) or is actuating it, the control unit (2) ordering the interrogation of the transponder (14) when the above-mentioned detection means detect the presence of the hand of the user at the said handle (11).

15. System according to one of Claims 12 to 14, **characterised in that** it includes means for detecting pressure from the user's hand on the handle (11), the control unit (2) ordering the locking of the door when the door is closed and the above-mentioned detection means detect pressure from the user's hand on the said handle (11).

16. System according to one of the preceding claims, **characterised in that** it also includes transmitter/receiver means (10) disposed inside the vehicle cabin and connected to a control unit (2), these means being designed to interrogate the transponder (4) when the user enters the vehicle, the said control unit (2) ordering the deactivation of the engine immobiliser when the identification code of the transponder (4) is identified.

17. System according to Claim 16, **characterised in that** the control unit (2) which orders the deactivation of the immobiliser and the control unit (2) are combined.

18. System according to either of Claims 16 and 17, **characterised in that** the transmitter/receiver means disposed inside the vehicle cabin regularly interrogate the transponder (4) when the user is inside the vehicle.

19. System according to one of the preceding claims, **characterised in that**, together with its identification code, the transponder (4) transmits to the control unit (2) information for the personalised adjustment of certain elements of the vehicle, for adjusting the position of the seats or of the rear-view mirrors for example.

20. System according to Claim 19, **characterised in that** the control unit (2) controls the adjustment of these various elements in a localised manner, depending on the door used by the user.

21. Motor vehicle, **characterised in that** it includes for at least one of its openable members, especially its boot, an unlocking and/or opening system according to one of the preceding claims.

## Patentansprüche

1. System zum Entriegeln und/oder Öffnen einer zu öffnenden Einrichtung (C) eines Kraftfahrzeuges, das eine an dem Fahrzeug angeordnete Steuervorrichtung (2) umfaßt, welche die Mittel zum Entriegeln und/oder Öffnen der Einrichtung (C) sowie die Sende- und Empfangseinrichtungen (3) steuert, die mit der Steuervorrichtung (2) verbunden sind, wobei das besagte System ebenfalls die Sende- und Empfangseinrichtungen (4) umfaßt, die von dem Benutzer getragen wird und dazu bestimmt ist, an die Sende- und Empfangseinrichtungen (3) einen Identifikationscode zu übertragen, um die zu öffnende Einrichtung zu entriegeln und/oder zu öffnen, wobei die Sende- und Empfangseinrichtungen des Benutzers aus einem von dem Benutzer getragenen Transponder (4) bestehen, wobei die Sende- und Empfangseinrichtungen (3) des Fahrzeuges mindestens eine an der zu öffnenden Einrichtung (C) oder in der Nähe von diesem angeordnete Antenne (5a, 5b) umfassen, wobei die besagten Sende- und Empfangseinrichtungen (3) nur in Wechselwirkung mit dem Transponder (4) treten, wenn dieser sich in unmittelbarer Nähe der besagten Antenne (5a, 5b) befindet, **dadurch gekennzeichnet, daß** die Steuervorrichtung die Entriegelung und/oder das Öffnen der zu öffnenden Einrichtung (C) bewirkt, wenn der Transponder entsprechend einem vorbestimmten Ablauf an der Antenne oder an den Antennen (5a, 5b) der Sende- und Empfangseinrichtungen (3) des Fahrzeuges dargeboten wird.

2. System nach Anspruch 1, **dadurch gekennzeichnet, daß** die Sende- und Empfangseinrichtungen (3) des Fahrzeuges mindestens zwei Antennen (5a, 5b) umfassen, vor denen der Transponder (4) entsprechend einem vorbestimmten Ablauf dargeboten werden muß, damit die Steuervorrichtung (2) die Entriegelung und/oder Öffnung des Teiles (C) bewirkt.

3. System nach Anspruch 2, **dadurch gekennzeichnet, daß** die Antennen (5a, 5b) in einer Richtung verteilt angeordnet sind, die derjenigen der Breite des Teiles (C) entspricht.

4. System nach einem der vorhergehenden Ansprüche, **dadurch gekennzeichnet, daß** es Mittel (7) zur Feststellung der Anwesenheit eines Benutzers in der Nähe der zu öffnenden Einrichtung (C) umfaßt.

5. System nach Anspruch 4, **dadurch gekennzeichnet, daß** die mittel (7) zur Feststellung der Anwesenheit eines Benutzers mindestens einen Ultraschallsensor umfassen.

6. System nach einem der vorhergehenden Ansprüche, **dadurch gekennzeichnet, daß** das System in der Nähe einer der Antennen (5a, 5b) Anzeigemittel (8) aufweist, die es ermöglichen, dem Benutzer die Erkennung oder Nichterkennung des Identifikationscodes eines vor der besagten Antenne (5a, 5b) dargebotenen Transponders (4) und/oder den Erfolg des Erkennungsvorganges des Darbietungsablaufes des Transponders (4) vor der oder den Antennen (5a, 5b) und/oder die unmittelbar bevorstehende Öffnung mitzuteilen.

7. System nach einem der vorhergehenden Ansprüche, **dadurch gekennzeichnet, daß** das System außerdem Mittel umfaßt, die ein manuelles Auslösen erlauben, wobei die Steuervorrichtung die Entriegelung und/oder Öffnung der zu öffnenden Einrichtung bewirkt, wenn diese Mittel aktiviert werden und wenn der Identifikationscode des Transponders (4), nachdem dieser vor einer Antenne (5a, 5b) dargeboten wird, erkannt wird.

8. System zum Entriegeln und/oder Öffnen eines zu öffenden Teiles (C) des Kofferraumes eines Kraftfahrzeuges, **dadurch gekennzeichnet, daß** es aus einem System gemäß einem der vorhergehenden Ansprüchen besteht.

9. System nach Anspruch 8, **dadurch gekennzeichnet, daß** die Antennen (5a, 5b) im Bereich der Stoßfänger des Fahrzeuges angeordnet sind.

10. System nach Anspruch 8, **dadurch gekennzeichnet, daß** die Antennen (5a, 5b) in der unmittelbaren Nachbarschaft der Rückleuchten des Fahrzeuges angeordnet sind.

11. System nach Anspruch 8, **dadurch gekennzeichnet, daß** die Antennen (5a, 5b) innerhalb der Rückleuchten des Fahrzeuges angeordnet sind.

12. Schlüsselloses System zum Verriegeln/Entriegeln des Kofferraumes und der Türen eines Kraftfahrzeuges, mit einem System zur Entriegelung und/oder zum Öffnen des Kofferraumes gemäß einem der Ansprüche 8 und folgende und mit Sende- und Empfangseinrichtungen (13), die eine Antenne (15) enthalten, welche in der unmittelbaren Nachbarschaft des Griffes (11) einer Tür (P) angeordnet ist, wobei diese Einrichtungen dazu dienen, mit dem Transponder (4) in Wechselwirkung zu treten, um von diesem den Identifikationscode zu ermitteln, wobei besagte Einrichtungen (13) nur dann mit dem besagten Transponder in Wechselwirkung treten, wenn dieser in der unmittelbaren Nachbarschaft des Griffes (11) angeordnet ist.

13. System nach Anspruch 12, **dadurch gekennzeichnet, daß** die Türen des Fahrzeuges keine mittels mechanischer Schlüssel betätigbare Schlösser aufweisen.

14. System nach einem der Ansprüche 12 oder 13, **dadurch gekennzeichnet, daß** der Griff (11) Mittel (17) umfaßt, um festzustellen, wenn sich die Hand des Benutzers in unmittelbarer Nähe des Griffes (11) befindet oder diesen betätigt, wobei die Steuereinrichtung (2) die Abfrage des Transponders (14) durchführt, wenn die Abfragemittel die Anwesenheit der Hand des Benutzers im Bereich des besagten Griffes feststellen.

15. System nach einem der Ansprüche 12 bis 14, **dadurch gekennzeichnet, daß** das System mittel zum Feststellen eines Druckes der Hand des Benutzers auf den Griff (11) enthält, wobei die Steuervorrichtung (2) die Verriegelung der Tür bewirkt, wenn die Tür wieder geschlossen wird und wenn die Mittel einen Druck der Hand des Benutzers des besagten Griffes (11) feststellen.

16. System nach einem der vorhergehenden Ansprüche, **dadurch gekennzeichnet, daß** das System ebenfalls Mittel zum Senden/Empfangen (10) umfaßt, die im Inneren des Karosseriegehäuses des Fahrzeuges angeordnet und mit einer Steuervorrichtung (2) verbunden sind, wobei diese Mittel zur Abfrage des Transponders (4) dienen, wenn der Benutzer in das Fahrzeug einsteigt, und wobei die besagte Steuervorrichtung (2) die Deaktivierung der Sperrvorrichtung des Motors bewirkt, wenn der Identifikationscode des Transponders (4) identifiziert wird.

17. System nach Anspruch 16, **dadurch gekennzeichnet, daß** die Steuervorrichtung (2), welche die Deaktivierung der Sperrvorrichtung des Motors steuert und die Steuervorrichtung (2) zusammenfallen.

18. System nach einem der Ansprüche 16 oder 17, **dadurch gekennzeichnet, daß** die Mittel zum Senden/Empfangen, die im Inneren des Karosseriegehäuses des Fahrzeuges angeordnet sind, regelmäßig den Transponder (4) abfragen, wenn der Benutzer sich im Inneren des Fahrzeuges befindet.

19. System nach einem der vorhergehenden Ansprüche, **dadurch gekennzeichnet, daß** der Transponder (4) zusammen mit seinem Identifikationscode Informationen über kundenspezifische Einstellungen gewisser Elemente des Fahrzeuges, z.B. die Einstellung der Lage der Sitze oder der Rückspiegel, an die Steuervorrichtung (2) überträgt.

20. System nach Anspruch 19, **dadurch gekennzeichnet, daß** die Steuervorrichtung (2) in Abhängigkeit von der Tür, an der sich der Benutzer befindet, die Einstellung der verschiedenen Elemente örtlich begrenzt ansteuert.

21. Kraftfahrzeug, **dadurch gekennzeichnet, daß** es für mindestens eines seiner zu öffnenden Einrichtungen, insbesondere seinem Kofferraum, ein System zum Entriegeln und/oder Öffnen gemäß einem der vorhergehenden Ansprüche enthält.
